# DEMANDE DE BREVET EUROPEEN

(11) **EP 4 684 641 A1**
(43) Date de publication de la demande: **28.01.2026**
(21) Numéro de dépôt: 25190913.1
(22) Date de dépôt: 22.07.2025
(51) Int. Cl.: A21B 3/13, A47J 27/12, B65D 25/06, B65D 1/34, A47J 36/16

(54) **DISPOSITIF DE SÉPARATION POUR PLAT DE CUISSON**

(30) Priorité: 23.07.2024 FR 2408106
(71) Demandeur: Cofarim, 69530 Brignais (FR)
(72) Inventeur: DEBART, Loïc, 69530 Brignais (FR); RIEHL, Franck, 69003 Lyon (FR); AMMEUX, Laurent, 69660 Collonges au Mont d'Or (FR)
(74) Mandataire: Plasseraud IP

(57) **Abrégé**

Séparateur (4) pour plat (2) de cuisson comportant :
- une plaque de verre (16), et
- un enrobage (18) de ladite plaque de verre en silicone

## Description

La présente divulgation concerne un dispositif de séparation pour plat de cuisson, notamment un plat destiné à une préparation culinaire, par exemple un plat pouvant aller au four.

### Domaine technique

La présente divulgation relève du domaine des accessoires de cuisson, notamment pour une cuisson au four.

### Technique antérieure

Il est connu de munir un plat de cuisson au four d'au moins un séparateur pour permettre en une seule cuisson au four de cuire deux ou plusieurs plats. Certains plats comprennent notamment des rainures de maintien d'un séparateur, qui peuvent gêner la confection de la préparation culinaire lorsqu'ils sont utilisés en l'absence de ce séparateur. Par ailleurs, la présence de rainures dans ces plats limite le nombre de séparateurs qui peuvent être utilisés.

Le plus souvent, les séparateurs sont utilisés pour la cuisson de pâtisseries. Au lieu de faire un grand gâteau, plusieurs petits gâteaux sont réalisés.

Les problèmes rencontrés avec les séparateurs connus sont des problèmes d'étanchéité entre les compartiments créés. Il convient alors de prévoir deux préparations semblables ou proches en goût l'une de l'autre pour qu'une fuite ne vienne pas trop altérer le goût des préparations.

Un autre problème est de pouvoir mettre facilement en place le séparateur et aussi de pouvoir le disposer où l'on veut dans le plat, pas uniquement en un nombre limité de positions.

Encore un autre problème concerne le fait que certains séparateurs, notamment les séparateurs métalliques, peuvent abimer le revêtement du plat.

### Résumé

La présente divulgation vient améliorer la situation. Elle a pour but de proposer un séparateur pour plat qui soit étanche. Ce séparateur pourra aussi de préférence être facile à positionner et/ou pouvoir être disposé dans un plat au gré de son utilisateur. Il est par ailleurs à noter qu'un utilisateur qui souhaiterait utiliser plusieurs séparateurs pour sa préparation pourrait utiliser autant de séparateurs selon la présente divulgation qu'il le souhaite sans endommager le plat.

Il est proposé un séparateur pour plat de cuisson qui comporte :
- une plaque de verre, et
- un enrobage de ladite plaque de verre en silicone.

Un tel séparateur, de conception qui peut apparaître simple, permet une grande facilité d'utilisation, une bonne résistance à la chaleur, un bon maintien en place (malgré l'absence de tout moyens de fixation tels des crochets ou similaires) et aussi une étanchéité créée entre les compartiments inconnue des inventeurs parmi les dispositifs de l'art antérieur. Par ailleurs, l'enrobage en silicone du séparateur selon la présente divulgation permet de protéger le revêtement du plat contre d'éventuels dégâts.

Les caractéristiques exposées dans les paragraphes suivants peuvent, optionnellement, être mises en œuvre, indépendamment les unes des autres ou en combinaison les unes avec les autres :
- la plaque de verre est réalisée en verre trempée ; et/ou
- l'enrobage de la plaque de verre est obtenu par surmoulage ; et/ou
- le séparateur comporte deux faces frontales reliées par un bord périphérique, et l'enrobage en silicone présente au moins une lèvre (d'étanchéité) sur une partie d'un pourtour d'une face frontale ; et/ou chaque face frontale présente une forme avec quatre côtés reliés par des zones arrondies, et une lèvre (d'étanchéité) s'étend sur trois des quatre côtés d'une face ainsi qu'au moins partiellement dans les zones arrondies ; et/ou
- ledit séparateur comporte un premier plan de symétrie parallèle à une face de la plaque de verre et un deuxième plan de symétrie perpendiculaire au premier plan de symétrie ; et/ou
- ledit séparateur comporte deux faces frontales reliées par un rebord périphérique, et l'enrobage présente au moins une surépaisseur sur le rebord périphérique s'étendant perpendiculairement dudit rebord périphérique ; et/ou
- chaque surépaisseur est disposée entre deux lèvres (d'étanchéité) ; et/ou
- le séparateur présente selon une vue de face une forme globalement trapézoïdale avec une petite base, une grande base et deux bords inclinés reliant à chaque fois la petite base à la grande base, et chaque surépaisseur se situe à une extrémité d'un bord incliné à proximité de la grande base.

Selon un autre aspect, il est proposé un plat de cuisson présentant un fond et des parois latérales, caractérisé en ce qu'il est muni d'un séparateur tel que décrit ci-dessus, ledit séparateur pouvant reposer sur le fond du plat de cuisson et s'étendre d'une paroi latérale dudit plat à une paroi latérale opposée.

Dans un tel plat de cuisson, les caractéristiques avantageuses suivantes peuvent être mises en œuvre indépendamment les unes des autres ou en combinaison :
- le séparateur comporte au moins une lèvre d'étanchéité destinée à venir en contact en se déformant avec le fond du plat de cuisson et deux parois latérales opposées ; et/ou
- le plat présente un revêtement céramique.

Enfin, selon un autre aspect, il est proposé un procédé pour séparer l'espace intérieur d'un plat de cuisson en deux compartiments distincts, ledit plat de cuisson comportant un fond et des parois latérales, caractérisé en ce qu'il comporte les étapes suivantes :
- fourniture d'un séparateur tel que décrit ci-dessus, ledit séparateur étant adapté aux dimensions du plat de cuisson, et
- mise en place du séparateur dans le plat de cuisson de telle sorte que ledit séparateur vienne au contact du fond du plat de cuisson et de deux parois latérales opposées.

### Brève description des figures

D'autres caractéristiques, détails et avantages apparaîtront à la lecture de la description détaillée ci-après, et à l'analyse du dessin annexé, sur lequel :
**Fig. 1**

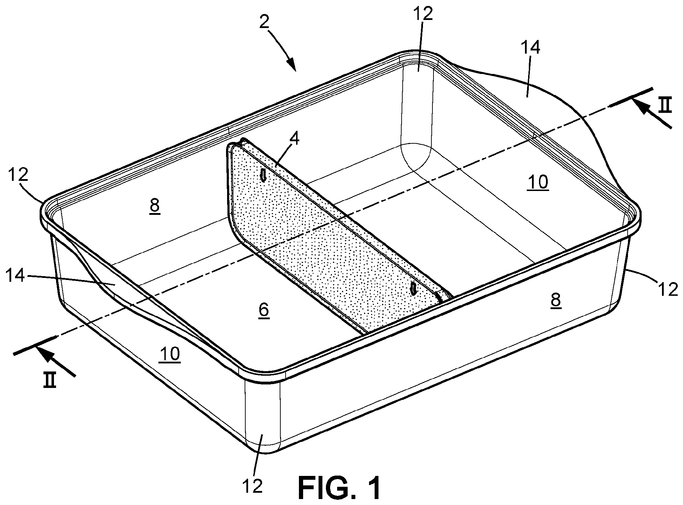

   [Fig. 1] montre en perspective un plat de cuisson muni d'un séparateur selon un mode de réalisation.
**Fig. 2**

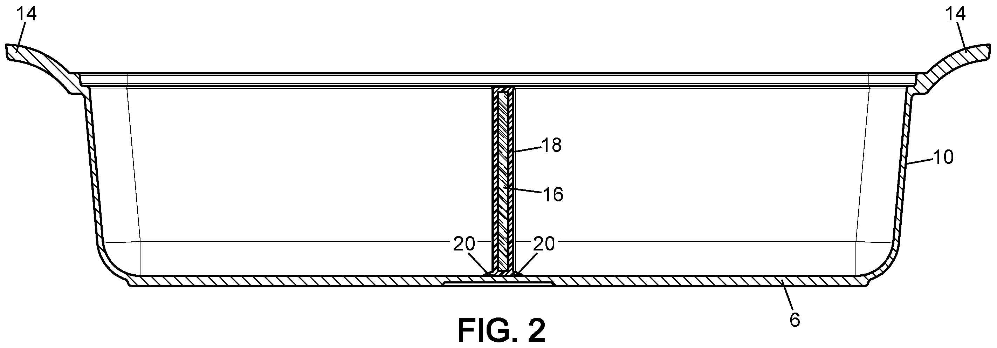

   [Fig. 2] est une vue en coupe selon la ligne de coupe II-II de la figure 1.
**Fig. 3**

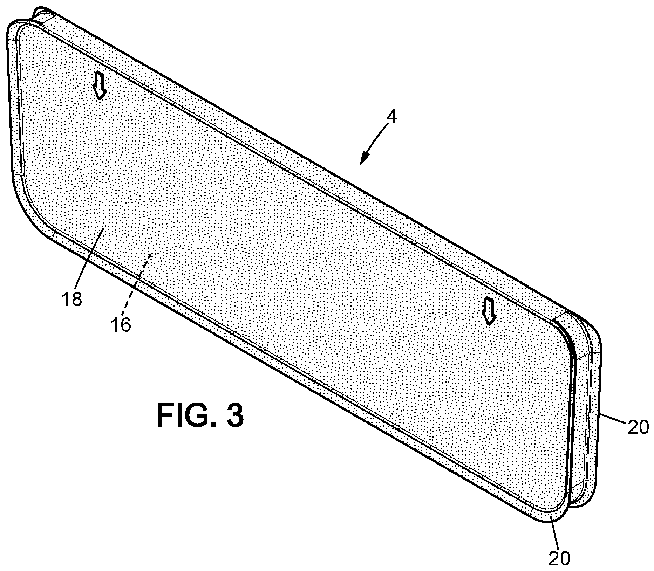

   [Fig. 3] montre en perspective le séparateur des figures 1 et 2
**Fig. 4**

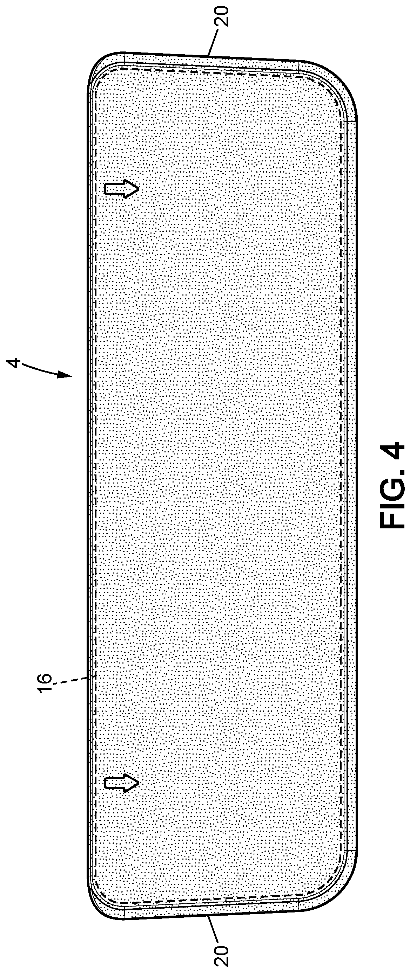

   [Fig. 4] montre le séparateur de la figure 1 en vue de face.
**Fig. 5**

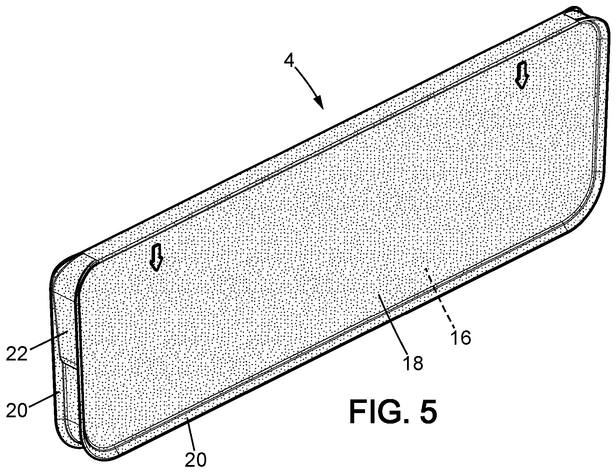

   [Fig. 5] montre en perspective une variante de réalisation du séparateur des figures 1 à 4.
**Fig. 6**

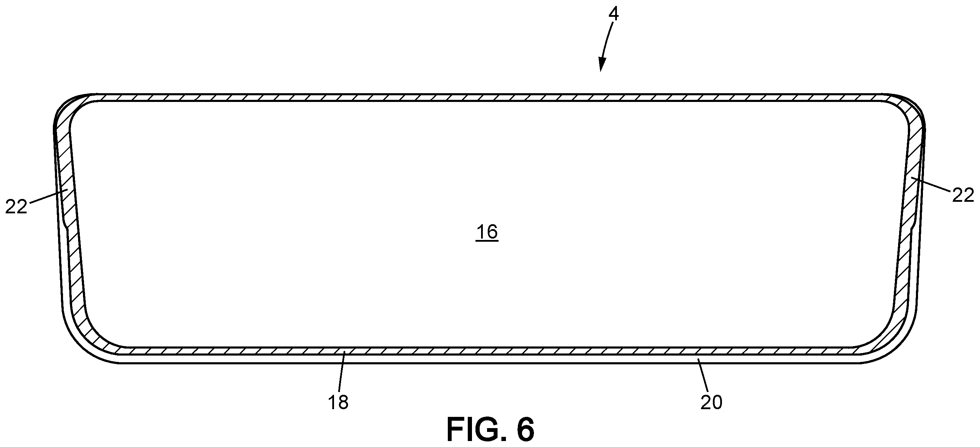

   [Fig. 6] est une vue en coupe du séparateur de la figure 5 selon un plan de coupe parallèle aux faces principales dudit séparateur.
**Fig. 7**

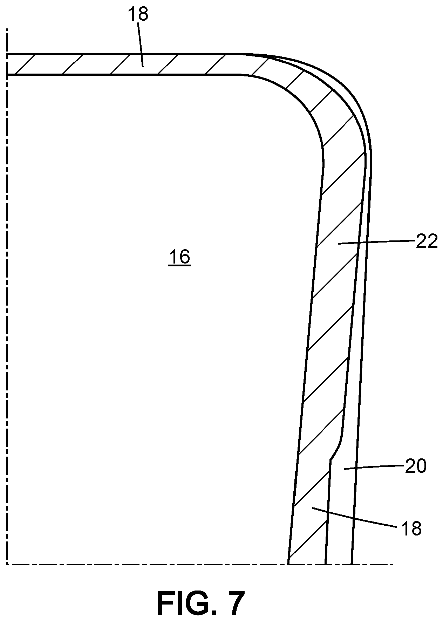

   [Fig. 7] est une vue de détail à échelle agrandie de la figure 6.

### Description des modes de réalisation

Il est maintenant fait référence à la figure 1. On reconnait sur cette figure un plat 2 destiné à la cuisson d'aliments à l'intérieur duquel se trouve un séparateur 4.

Le plat 2 présente un fond 6 et est entouré de quatre parois latérales, deux grandes parois latérales 8 alternant avec deux petites parois latérales 10. Le fond 6 et les parois latérales définissent un espace concave destiné à contenir de manière classique des aliments (viandes, légumes, préparation culinaire sucrée ou salée, etc.). Le plat 2 est par exemple réalisé en métal, et peut être recouvert, à l'intérieur de l'espace concave, d'un revêtement anti-adhérent, par exemple un revêtement céramique. Le fond 6 est de préférence plat et est destiné à être orienté horizontalement. On supposera par la suite que le fond est à l'horizontale. Les parois latérales (grandes parois latérales 8 et petites parois latérales 10) s'étendent à partir du fond 6 et forment avec ledit fond un angle légèrement obtus (pour faciliter un démoulage lorsque le plat est utilisé comme moule par exemple pour un flan, un gâteau ou similaire). Chaque grande paroi latérale 8 est reliée à une petite paroi latérale 10 par une portion arrondie 12. Dans la forme de réalisation illustrée, chaque petite paroi latérale 10 est munie d'un rebord s'étendant vers l'extérieur sensiblement parallèlement au fond 6 et formant ainsi une poignée 14 facilitant la préhension du plat 2.

Le séparateur 4 est de forme adaptée à la forme du plat 2. Ce séparateur 4 permet de diviser en deux parties l'espace concave défini par le fond 6 et les parois latérales décrits plus haut.

De manière tout à fait originale, le séparateur 4 présente un noyau 16 en verre et un enrobage 18 en silicone. L'enrobage 18 entoure toute la surface extérieure du noyau 16 et vient ainsi recouvrir tout le noyau 16, sur toutes ses faces.

Le noyau 16 est une plaque de verre, de préférence de verre trempé. Sa forme est adaptée au plat 2 et reprend sensiblement la forme et les dimensions d'une paroi latérale, dans l'exemple illustré d'une petite paroi latérale 10. Ainsi la forme globale du séparateur 4 (et de son noyau 16) est celle d'un trapèze isocèle avec des angles arrondis. Le noyau 16 en verre -trempé- se présente sous la forme d'une plaque avec deux faces principales ou faces frontales (de forme trapézoïdale isocèle avec des angles arrondis) reliées entre elles par un rebord périphérique, le rebord périphérique s'étendant de préférence, comme illustré, perpendiculairement aux faces frontales du noyau 16. Le noyau 16 peut être ainsi obtenu par découpe d'une plaque de verre trempé.

Le noyau 16 est enrobé par du silicone. De même que le noyau 16, le séparateur 4 présente alors lui aussi deux faces principales, ou frontales, reliées par une tranche périphérique (correspondant à la périphérie du trapèze). Ainsi, le verre trempé ne vient pas directement au contact du plat 2. L'enrobage est de préférence réalisé par surmoulage. Ce procédé d'enrobage permet aussi de former deux lèvres d'étanchéité 20 sur le séparateur 4. Chaque lèvre d'étanchéité 20 s'étend à partir d'un bord se trouvant à la jonction d'une face frontale et de la tranche périphérique vers l'extérieur du séparateur. À chaque face principale (ou frontale) correspond une lèvre d'étanchéité et les deux lèvres d'étanchéité 20 s'étendent à partir du séparateur en divergeant l'une de l'autre. Chaque lèvre d'étanchéité 20 s'étend le long de trois côtés du séparateur 4 correspondant à la petite base du trapèze et aux deux bords inclinés. Elles peuvent encore s'étendre sur les arrondis entre les bords inclinés et la grande base du trapèze. Si le plat 2 devait être muni d'un couvercle, on pourrait envisager d'avoir des lèvres s'étendant sur toute la périphérie du séparateur 4.

Les figures 5 à 7 illustrent une variante de réalisation préférée d'un séparateur 4. Ces figures reprennent les mêmes références que celles des figures 1 à 4 pour désigner des éléments similaires.

On retrouve dans cette variante de réalisation le même noyau 16, de préférence en verre trempé, et celui-ci est également entièrement enrobé de silicone par un enrobage 18. On retrouve ici aussi deux lèvres d'étanchéité 20 qui sont similaires à celles décrites précédemment.

Comme on peut le voir sur les figures 5 à 7, l'enrobage 18 présente deux surépaisseurs 22. Le noyau 16 en vue de face présente une forme de trapèze isocèle avec des angles arrondis et présente donc deux bords inclinés, reliés l'un à l'autre d'une part par une grande base et d'autre part par une petite base. Les surépaisseurs 22 sont disposées sur le rebord périphérique du noyau au niveau des extrémités des bords inclinés du côté de la grande base du trapèze. Ces surépaisseurs 22 viennent prendre place entre les lèvres d'étanchéité 20.

On remarque sur les figures 5 à 7 que l'enrobage 18 et donc la face extérieure du séparateur 4 présente sur sa tranche (correspondant au rebord périphérique du noyau 16) une solution de continuité, comme une petite marche, par rapport à la tranche périphérique du séparateur de la figure 3. On remarque sur les vues en coupe (figures 6 et 7) que l'épaisseur de l'enrobage 18, mesurée perpendiculairement à la tranche périphérique du noyau 16, est plus grande dans la partie supérieure (c'est-à-dire du côté de la grande base) que dans la partie inférieure (c'est-à-dire du côté de la petite base) des bords inclinés.

Le séparateur 4 est destiné à venir prendre place dans le plat 2 de telle sorte que la petite base du trapèze se trouve face au fond 6 et que les bords inclinés du trapèze soient quant à eux chacun face à une grande paroi latérale 8. On trouve alors une lèvre d'étanchéité 20 sur chaque face du séparateur 4. Chaque lèvre d'étanchéité 20 est formée à l'intersection d'une face frontale du séparateur et de son rebord périphérique. Chaque lèvre d'étanchéité 20 s'étend par exemple sur chaque bord incliné du séparateur et sur la petite base pour se terminer au niveau de l'angle arrondi à chaque fois entre la grande base du trapèze et un bord incliné, autrement dit sur sensiblement toute la périphérie d'une face frontale du séparateur 4, sauf au niveau de la grande base du trapèze. Chaque lèvre d'étanchéité 20 au repos, c'est-à-dire comme montré sur la figure 3, s'étend vers l'extérieur du séparateur 4. Ainsi lorsque le séparateur 4 est mis en place dans le plat 2, chaque lèvre d'étanchéité 20 vient glisser sur le fond 6 et les grandes parois latérales 8 de telle sorte que son extrémité libre vienne s'écarter du séparateur 4, favorisant ainsi une bonne étanchéité entre le séparateur 4 et le plat 2. Le séparateur 4 présente avantageusement deux plans de symétrie : un premier plan médian dans l'épaisseur et un deuxième plan, transversal au premier et correspondant sensiblement au plan de coupe II-II de la figure 1.

La mise en place d'un séparateur 4 selon le mode de réalisation des figures 5 à 7 s'effectue de la même manière. Toutefois, en fin de mise en place dans le plat 2, la surépaisseur 22 est comprimée contre la paroi latérale (8 ou 10) correspondante ce qui favorise le maintien en position du séparateur 4 dans le plat. La compression des deux surépaisseurs 22 vient réaliser une contrainte élastique et un effet de coin qui assure une meilleure liaison entre le plat 2 et le séparateur 4. La présence d'une seule surépaisseur permettrait déjà d'avoir un effet de coincement mais il est bien entendu préférable d'avoir une surépaisseur au niveau de chaque paroi latérale.

Pour diviser l'espace à l'intérieur du plat 2 en deux espaces, il suffit de venir positionner le séparateur 4 en l'orientant sensiblement à la verticale et sensiblement (sans tenir compte de l'inclinaison par rapport à la verticale des parois latérales) parallèle aux petites parois latérales 10 du plat 2 et en venant par un mouvement vertical vers le fond 6 le faire entrer en contact avec le fond 6 et les grandes parois latérales 8. Le séparateur 4 tient alors par frottement et par effet ventouse et garantit une bonne étanchéité. Le séparateur 4 peut prendre toutes les positions possibles entre les deux petites parois latérales 10. Il est inutile d'adapter le plat 2 pour prédéterminer des positions dans lesquelles le séparateur 4 pourra venir prendre place.

Il est clair qu'en adaptant la forme du séparateur 4, il est envisageable de diviser l'espace intérieur du plat 2 dans le sens de la longueur, c'est-à-dire en disposant le séparateur non pas sensiblement perpendiculairement aux grandes parois latérales 8 mais parallèlement à celles-ci.

### Application industrielle

Les présentes solutions techniques peuvent trouver à s'appliquer à tout plat de cuisson, notamment ceux destiné à aller au four. Le choix des matériaux pour le séparateur permet d'en faire un produit très facile à utiliser, positionnable à souhait dans le plat pour créer des compartiments à taille variable. Bien entendu, il est possible d'utiliser plus d'un séparateur par plat pour former trois ou plus de compartiments.

Le silicone au contact du plat permet de réaliser une bonne étanchéité entre les compartiments créés. La présence d'une lèvre d'étanchéité (sur une face mais de préférence sur les deux pour favoriser un effet ventouse et le maintien du séparateur dans le plat) permet de parfaire cette étanchéité. Le maintien et l'étanchéité du séparateur sont aussi obtenus même lorsqu'un seul compartiment est utilisé pour recevoir des aliments, une préparation culinaire, etc., l'autre restant vide. Une surépaisseur sur le rebord périphérique du séparateur, destinée à faire face à une paroi latérale du plat, vient améliorer le maintien du séparateur dans le plat.

Dans la présente invention, le séparateur vient s'adapter au plat. Le plat est un plat classique, avec un fond plat, des parois latérales planes et aucune cale, système d'accroche, rainure ou autre élément lié au plat n'est nécessaire pour positionner et/ou maintenir en place le séparateur en position dans le plat.

La présente divulgation ne se limite pas à l'exemple de réalisation et aux variantes évoquées décrits ci-avant, seulement à titre d'exemple, mais elle englobe toutes les variantes que pourra envisager l'homme de l'art dans le cadre de la protection recherchée.

## Revendications

1. Séparateur (4) pour plat (2) de cuisson, **caractérisé en ce qu'**il comporte :
- une plaque de verre (16), et
- un enrobage (18) de ladite plaque de verre en silicone.

2. Séparateur (4) selon la revendication 1, **caractérisé en ce que** la plaque de verre (16) est réalisée en verre trempée.

3. Séparateur (4) selon l'une des revendications 1 ou 2, **caractérisé en ce que** l'enrobage (18) de la plaque de verre est obtenu par surmoulage.

4. Séparateur (4) selon l'une des revendications 1 à 3, **caractérisé en ce que** le séparateur (4) comporte deux faces frontales reliées par un rebord périphérique, et **en ce que** l'enrobage (18) en silicone présente au moins une lèvre (20) sur une partie d'un pourtour d'une face frontale.

5. Séparateur (4) selon la revendication 4, **caractérisé en ce que** chaque face frontale présente une forme avec quatre côtés reliés par des zones arrondies, et **en ce qu'**une lèvre (20) s'étend sur trois des quatre côtés d'une face ainsi qu'au moins partiellement dans les zones arrondies.

6. Séparateur (4) selon l'une des revendications 1 à 5, **caractérisé en ce qu'**il comporte un premier plan de symétrie parallèle à une face de la plaque de verre et un deuxième plan de symétrie perpendiculaire au premier plan de symétrie.

7. Séparateur (4) selon l'une des revendications 1 à 6, **caractérisé en ce que** le séparateur (4) comporte deux faces frontales reliées par un rebord périphérique, et **en ce que** l'enrobage (18) présente au moins une surépaisseur (22) sur le rebord périphérique et s'étendant perpendiculairement dudit rebord périphérique.

8. Séparateur (4) selon les revendications 5 et 7, **caractérisé en ce que** chaque surépaisseur (22) est disposée entre deux lèvres (20).

9. Séparateur selon l'une des revendications 7 ou 8, **caractérisé en ce que** le séparateur présente selon une vue de face une forme globalement trapézoïdale avec une petite base, une grande base et deux bords inclinés reliant à chaque fois la petite base à la grande base, et **en ce que** chaque surépaisseur (22) se situe à une extrémité d'un bord incliné à proximité de la grande base.

10. Plat (2) de cuisson présentant un fond (6) et des parois latérales (8, 10), **caractérisé en ce qu'**il est muni d'un séparateur (4) selon l'une des revendications 1 à 9, ledit séparateur (4) pouvant reposer sur le fond (6) du plat (2) de cuisson et s'étendre d'une paroi latérale (8 ; 10) dudit plat à une paroi latérale opposée (8 ; 10).

11. Plat (2) de cuisson selon la revendication 10, **caractérisé en ce que** le séparateur (4) comporte au moins une lèvre d'étanchéité (20) destinée à venir en contact en se déformant avec le fond (6) du plat de cuisson et deux parois latérales opposées (8 ; 10).

12. Plat (2) de cuisson selon l'une des revendications 10 ou 11, **caractérisé en ce qu'**il présente un revêtement céramique.

13. Procédé pour séparer l'espace intérieur d'un plat (2) de cuisson en deux compartiments distincts, ledit plat de cuisson comportant un fond (6) et des parois latérales (8, 10), **caractérisé en ce qu'**il comporte les étapes suivantes :
- fourniture d'un séparateur (4) selon l'une des revendications 1 à 9, ledit séparateur (4) étant adapté aux dimensions du plat (2) de cuisson, et
- mise en place du séparateur (4) dans le plat (2) de cuisson de telle sorte que ledit séparateur (4) vienne au contact du fond (6) du plat de cuisson et de deux parois latérales (8 ; 10) opposées.
